Europäisches Patentamt

European Patent Office

Office européen des brevets

(11) Publication number: **0 095 202**
**B1**

(12) **EUROPEAN PATENT SPECIFICATION**

(45) Date of publication of patent specification: **27.08.86**

(21) Application number: **83200669.6**

(22) Date of filing: **09.05.83**

(51) Int. Cl.⁴: **A 23 L 2/28**, A 23 L 2/16

(54) A method for the preparation of aseptic juice beverages.

(30) Priority: **21.05.82 SE 8203188**

(43) Date of publication of application:
**30.11.83 Bulletin 83/48**

(45) Publication of the grant of the patent:
**27.08.86 Bulletin 86/35**

(84) Designated Contracting States:
**AT BE CH DE FR GB IT LI NL SE**

(56) References cited:
**AT-B- 122 005**
**US-A-3 117 877**
**US-A-3 310 409**
**US-A-3 959 067**

(73) Proprietor: **TETRA PAK INTERNATIONAL AB**
**Fack 1701**
**S-221 01 Lund 1 (SE)**

(72) Inventor: **Rausing, Hans Anders**
**Wadhurst Park**
**Wadhurst, East Sussex TN 5 6NT (GB)**

(74) Representative: **Sevrell, Sven-Gösta Uno**
**Tetra Pak International AB Patent Department**
**Box 1701**
**S-22101 Lund 1 (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a method for the preparation of aseptic juice beverages which have the property that without cooling they can be stored for a long time without any appreciable change in flavour or consistency, provided the beverages prepared are kept sterile, that is to say in internally sterile and bacteria-tight packages.

In recent times it has become more and more customary to sterilize liquid foodstuffs and pack them in sterile packages under aseptic conditions. As mentioned above, it is the advantage of such a treatment that a very long, and in certain cases practically unlimited, life of the produce is obtained at the same time as the packed product does not have to be stored in a cold place. A product which is frequently sterilized and aseptically packaged in this manner is milk, which is very rapidly destroyed and decomposed by bacteria. Fruit juices, which as a rule are acid, are not affected as rapidly by bacteria as milk, but it has been found that juices and other fruit beverages are relatively rapidly subject to a deterioration of flavour after the juice has been prepared, but that this deterioration of the flavour can be prevented largely if the juice is sterilized and packed in sterile packages under aseptic conditions. Orange juice, for example, which normally has a relatively limited keeping quality, can be given a substantially extended life if it is sterilized and kept under sterilized conditions.

Liquid foodstuffs are sterilized as a rule through the ffect of heat, the objective being in general to heat the products in question as rapidly as possible to 120—140°C and to cool the products down again after a holding time of a few seconds (1—5 seconds) to room temperature or sometimes right down to 5°C. Such a heat effect kills the bacterial flora in the product and also inactivates spores and other microorganisms, thus causing the product to become sterile. The heat treatment also causes certain changes in flavour of the product and the heating to elevated temperatures leads to certain aroma substances being destroyed, with the result that the flavour of the product is substantially impaired by the heat treatment. It has been found, however, that in the concentration of fruit juices, e.g. orange juice, a large amount of aroma substance which disappears in connection with the water being driven out of the fruit juice can be recovered. These aroma substances can be condensed and recovered and it is possible, moreover, to obtain e.g. from orange peels the so-called "peel-oil" which contains strong aroma substances.

In accordance with the concept of the invention aroma substance is separated in the first place from the pressed fruit juice, whereupon the juice, wholly or partially freed of aroma substances, is heat-sterilized by heating to 85—110°C so that it becomes completely sterile, whereupon the aroma substances are dissolved in a liquid, preferably water, filtered through a so-called sterile filter, whereupon the filtered aroma substances freed from bacteria, are added to the heat-sterilized juice and mixed with the same to obtain a product of satisfactory flavour.

In the following some embodiments of the method in accordance with the invention will be given.

I. In the preparation of juice from citrus fruits, e.g. orange juice, the fruit juice is first pressed from the oranges, and the peels are collected. From the peel aroma substances, so-called "peel-oil" of very high concentration, can be recovered, and the recovery of these aroma substances may be done partly by pressing, but also by extraction with chemicals, e.g. alcohol, which is later separated and recovered. It is also possible to obtain these aroma substances by heat treatment at relatively low temperature and under low pressure, the aroma substances being evaporated even though the temperature does not exceed 60—80°C. The evaporated aroma substances subsequently can be condensed and collected. However, it is important that the aroma substance should not be heated to temperatures exceeding 100°C, since the aroma substances would then be destroyed.

The pressed fruit juice, possibly partially freed from aroma substances, can be heated in order to be sterilized which is usually done in such a manner that the fruit juice is heated for a short time in a so-called sterilizer to a temperature between 120—140°C and is cooled rapidly thereafter to room temperature or an even lower temperature. After such a treatment the fruit juice is wholly free of bacteria, but at the same time the aroma substance has been destroyed, so that the sterile fruit juice has lost its fruity flavour. The aroma substances extracted or collected in some other manner may be filtered, however, dissolved in a liquid, e.g. in aqueous solution, through a so-called bacteria filter, that is to say a filter with such small pores that bacteria cannot pass, whereupon the sterile, filtered liquid which contains concentrated aroma substances, is added under aseptic conditions to the heat-sterilized fruit juice. The mixture of the said two sterile components, which have been sterilized by different methods, will have substantially the same flavour as the ordinarily pressed orange juice, but is completely sterile. This sterile product can be packed under aseptic conditions in internally sterile, bacteria-tight packages, and since there are neither bacteria in the product nor can bacteria enter into the package, the product can be kept fresh without any deterioration in flavour for a prolonged period without having to be maintained at low temperature.

When the product treated contains fruit acid, which is the case in most fruit juices, and also in orange juice, the heat treatment does not have to be extended as far as 120—140°C, as is the case e.g. with milk, in order to maintain the product in a fresh state. It is true that there will be no total elimination of spores in the product if the heat treatment does not take place at a temperature of at least 120°C, but it has been found that even on heating to approx. 80—100°C all bacteria activity and bacteria growth ceases in the juice. The reason for this is that the more heat-resistant bacteria, and above all the spores, are not activated in acid medium, so that it is not necessary to render these spores innocuous. A heat treatment of the type mentioned is not carried here therefore to the extent of rendering the product completely sterile, but only so far as to prevent any bacteria growth in the product even after prolonged storage, provided the product is packed in sterile packages under aseptic conditions and that no bacteria can enter into the package.

II. Frequently fruit juices, and in particular juices of citrus fruit are treated in such a manner that the juice is concentrated by removing the water. This concentrated juice can be diluted with water when it is to be used, and the advantage of concentrated juice is that it can be distributed more readily and more cheaply. Concentrations of juice can be carried out by various methods, e.g. by freezing, but also by heating at such low pressure that the boiling away of the water takes place at a temperature which does not harm the aroma substances in the juice. Since the aroma substances are volatile, they will also disappear from the juice, but the volatile aroma substances can be condensed, together with the boiled away steam, to a liquid rich in aroma which is collected. The concentrated juice thus loses the bulk of its aroma substances and has very little flavor, wherefore the aroma substances have to be added again after the concentration of the juice. Concentrated orange juice too can be sterilized, and as in the case mentioned earlier, the sterilization of the concentrated juice takes place with the help of heat, whilst by contrast the aroma substances are sterilized separately by pressing the aroma substances contained in the aqueous solution through a so-called bacteria filter, whereupon the filtered aroma substances are added to the sterilized juice after it has been cooled. As mentioned previously, the concentrated juice provided with aroma substances is packed in internally sterile packages under aseptic conditions.

III. Not only orange juice can be treated in accordance with the invention, but it applies also to other types of fruit juices. Certain fruit juices in themselves have an "insignificant" flavour, which means that the fruit juice will be commercially not desirable. However, since the fruit juice may contain valuable nutritional substances, the flavour may be improved through the addition of artificial essences, e.g. fruit esters, or through the addition of natural aroma substances, such as e.g., aroma substances from oranges, lemons, bananas etc. In other words sterilized fruit juice of one type may be blended with either separately sterilized, artifical essences or with natural aroma substances from other fruits.

It has been found very appropriate and economically advantageous for example, to recover plant juice, that is to say cane juice from sugar cane which in itself is only sweet but has no characteristic fruit flavour. This cane juice can be obtained in large quantities at a relatively low price, and the cane juice obtained can be sterilized by heating in the manner mentioned previously. The sterilized can juice can then be blended with separately sterilized aroma substances which have been extracted e.g. from citrus fruits, bananas, pears etc., the beverage prepared obtaining a characteristic fruity flavour whilst containing at the same time the nutritional substances of the cane juice. By the same method the juice from apples, grapes etc. may be given a flavour different from the natural one by destroying the normal aroma substances during the sterilization and giving the juice treated a "neutral flavour". By adding, for example, concentrated aroma substances from peaches to a sterilized apple juice, the juice as a whole is given peach flavour, and since the "base juice" which has been prepared from apples as well as the aroma substances which have been prepared from peaches or have been manufactured by a synthetic route each by themselves have been sterilized, the final product will be sterile, which means, as mentioned previously, that it can be packed under aseptic conditions and by this method is given a very long "life".

As mentioned before, the sterilization of fruit juices is done by means of heating, a method which in accordance with the present invention provides two substantial advantages. In the first place the sterilization by means of heating is a very quick and effective method of sterilization and the method, moreover, does not involve the introduction of any foreign substances such as chemical sterilizing agents into the product. This method of sterilization is very suitable for the treatment of large quantities of juice. The other advantage is that the heat treatment to a large extent neutralizes the natural flavour substances in the fruit juice which, as mentioned earlier, is desirable in cases where it is wished to alter the character of the flavour of the juice treated. It is also possible to extract the aroma substances from the fruit juice treated during the heat treatment in cases where one wishes to recover these flavour substances as the aroma substances are volatile and on heating separate from the fruit juice to be condensed again later. It is a precondition, however, that this recovery of aroma substances does not take place at a temperature which is so high that the aroma substances are destroyed by decomposition because of the heating. This heating of the "base juice" may be done with the help of commercial sterilizers of the direct or of the indirect type, that is to say both by heat being transferred through convection in a heat exchanger of high capacity or by the fruit juice being brought into direct contact with a steam jet and being heated instantaneously to the temperature of the steam.

As mentioned previously, the aroma substances cannot be sterilized by means of heat, but some method of "cold sterilization" has to be adopted. Since the quantity of concentrated aroma substance is infinitely small (one or more per mil to a few per cent depending on the type of aroma substance in question) it has been found that it is preferable to sterilize the aroma substances separately by filtration, and for this purpose to dissolve the aroma substances in water or in some other carrier liquid, e.g., glucose, whereupon the liquid containing the aroma substances is pressed through a microfilter of such small pores that bacteria cannot pass. This type of sterilization method is expensive in itself and is not suitable for larger quantities of liquid treated, since the filter becomes clogged up after being used for some time. However, since it is a matter of very small quantities of aroma concentrate, the costs are of no decisive importance. It is possible to sterilize the aroma substances by other methods, e.g. by irradiation with electrons or by sterilizing the aroma substances with the help of a sterilizing gas. Since such gases are in most cases toxic, however, this method implies a relatively complicated ventilation with sterile air in order to remove the sterilizing gas in a satisfactory manner after the treatment.

As mentioned before it has been found that bacteria filtration, in some cases in combination with bacteria centrifuging, is the best sterilization method for aroma substances, and the blending together of the sterile, bacteria-filtered aroma substances and the sterilized "base juice" may be carried out advantageously so that sterilized aroma substances are added continuously to the base juice as the base juice is conveyed from the sterilizer to a storage tank of the said automatic packing machine. It has to be ensured then that the metering of sterilized aroma substances will be exact and uniform so as to prevent variations of flavour in the packages produced and this assumes that beside the metering units some type of mixing unit is provided which intimately blends together the sterilized aroma substance supplied with the sterilized fruit juice.

It has been found that a method in accordance with the invention is relatively simple to be realized, that it provides great freedom of choice with regard to the composition of the beverage prepared and a very long "life" of the product.

## Claims

1. A method for the preparation of aseptic juice beverages, whereby fruit juice or juice from plants, pressed or obtained by some other method, is sterilized by heating to between 90—140°C, preferably 85—95°C, characterized in that natural or artificial aroma substances are added which have been sterilized separately without heating, e.g. by means of sterile filtration, and that the mixture of fruit juice and aroma substances so obtained is packed in sterile packages under aseptic conditions.

2. A method in accordance with Claim 1, characterized in that the aroma substances are extracted from the fruits or parts thereof pressed during the preparation of the beverages.

3. A method in accordance with Claim 2, characterized in that the aroma substances are extracted from the fruit in connection with the concentration through evaporation of the fruit juice.

4. A method in accordance with Claim 1, characterized in that the fruit juice and the aroma substances are of the same origin.

5. A method in accordance with Claim 1, characterized in that the fruit juice consists of cane juice.

## Patentansprüche

1. Verfahren zur Herstellung keimfreier Fruchtsaftgetränkte, mit dem Fruchtsaft oder Zuckerrohrsaft, der durch Auspressen oder anderweitig erhalten ist, durch Erhitzen auf 90—140°C, bevorzugt auf 85—95°C, sterilisiert wird, dadurch gekennzeichnet, daß natürliche oder künstliche Aromastoffe zugefügt werden, die gesondert ohne Erhitzen, z.B. durch Entkeimungsfiltration, sterilisiert wurden, und daß das so erzeugte Gemisch aus Fruchtsaft und Aromastoffen unter keimfreien Bedingungen in sterile Packungen abgepackt wird.

2. Verfahren nach Anspruch 1, dadurch gekennzeichnet, daß die Aromastoffe aus den Früchten oder aus Teilen derselben, die während der Herstellung der Getränke ausgepreßt wurden, extrahiert werden.

3. Verfahren nach Anspruch 2, dadurch gekennzeichnet, daß die Aromastoffe aus den Früchten in Verbindung mit der Eindickung durch Verdampfen des Fruchtsafts extrahiert werden.

4. Verfahren nach Anspruch 1, dadurch gekennzeichnet, daß der Fruchtsaft und die Aromastoffe gleichen Ursprung haben.

5. Verfahren nach Anspruch 1, dadurch gekennzeichnet, daß der Fruchtsaft aus Zuckerrohrsaft besteht.

## Revendications

1. Procédé de préparation de boissons de jus aseptiques qui consiste à stériliser du jus de fruits ou de plantes pressé ou obtenu de toute autre manière, par chauffage entre 90 et 140°C, de préférence entre 85 et 95°C, caractérisé en ce qu'on ajoute des substances naturelles ou synthétiques qui ont été stérilisées séparément sans chauffage, par exemple par filtration stérile, et on emballe le mélange de jus de fruit et de substances aromatiques ainsi obtenu dans des emballages stériles et sous conditions aseptiques.

2. Procédé selon la revendication 1, caractérisé en ce que les substances aromatiques sont extraites de fruits ou de parties de fruits pressés pendant la préparation des boissons.

3. Procédé selon la revendication 2, caractérisé en ce que les substances aromatiques sont extraites des fruits lors de la concentration par évaporation de jus de fruit.

4. Procédé selon la revendication 1, caractérisée en ce que le jus de fruit et les substances aromatiques sont de même origine.

5. Procédé selon la revendication 1, caractérisé en ce que le jus de fruit est constitué par du jus de canne.